Europäisches Patentamt

European Patent Office

Office européen des brevets

(19)

(11) Publication number: **0 089 449**

**A1**

# (12) EUROPEAN PATENT APPLICATION

(21) Application number: 82830069.9

(22) Date of filing: 23.03.82

(51) Int. Cl.³: **F 16 C 33/78**
**F 04 D 29/12**

(43) Date of publication of application:
28.09.83 Bulletin 83/39

(84) Designated Contracting States:
AT BE CH DE FR GB IT LI LU NL SE

(71) Applicant: Ditta IMITOOLS
Via Modena, 17
Ferrara(IT)

(72) Inventor: Osti, Elio
Via Tancredi 5
Ferrara(IT)

(74) Representative: Sassatelli, Franco
c/o INIP Ufficio Internazionale Brevetti per Deposito di
Brevetti e Marchi via Mazzini, 170
I-40139 Bologna(IT)

(54) Bearing with integrated sealing device for motor water pumps.

(57) Two sets of balls (2, 3) are used, kept by two cages (4, 5) in position at equal distance on a shaft (1), engaged in a cylindrical tube (6), to be integrally mounted on the pump. The cylindrical tube (6) is hooked on the end of a gasket body (8) allowing to seal on the shaft (1), on the pump (9) and on a counterface body (10) pressed on a ring (11) by a pushing spring (12) on a crown relief (16) of the shaft (1). On the other end of the cylindrical tube (6), a sealing element is fitted in an inner annular groove (19), consisting of a plate (20) covered with vulcanized rubber (21). In the gasket body (8), a duct (17) is foreseen for draining the liquid infiltrations.

EP 0 089 449 A1

FIG.2

- 1 -

Bearing with integrated sealing device for motor water pumps.

The invention refers to a bearing with integrated sealing device, to be emplo
ed in the water pumps for motors. Such pumps are in general to be used with
motors cooled by liquid circulation, and particularly with those for motor cars,
trucks, lorries, excavators and tractors. For the movement of the turning pie
ce determinating the liquid circulation, these pumps employ a bearing with two
ball crowns or with one ball crown and one roller crown and one sealing device. This compartment is at present mounted by fitting a gasket on the shaft
positioned· on the relevant counterface.

The turning piece is fitted, which contemporarily acts as a lock and a seal,
by means of a contact surface properly ground. ;The invention permits to avoid
the above mounting sequences by adopting an operative assembly including both
the ball bearing and the gasket and in this way is to be directly mounted in
the pump body. Therefore, the proceeding enables to reduce the mounting times,
a better compacting of the pump components and a more efficient seal.

The operative assembly foresees a cylindriccal coaxial body which can be fitted integral on the pump, for mounting · the supporting shaft of the turning
piece which rotates on two ball sets kept by two cages at equal distance. The
said coaxial is hooked in an integrally operating way on the end of a gasket
body for  sealing on the shaft, on the pump and on a counterface body pressed,
by means of a ring, by a thrusting spring on a crown-shaped relief of the sfa-
ft.

On the other coaxial end, a preclusion sieve is foreseen positioned in an inner annular groove and consisting of a thin plate covered with vulcanized rubber.

In the gasket body, a draining duct is foreseen for eliminating the liquid in filtrations.

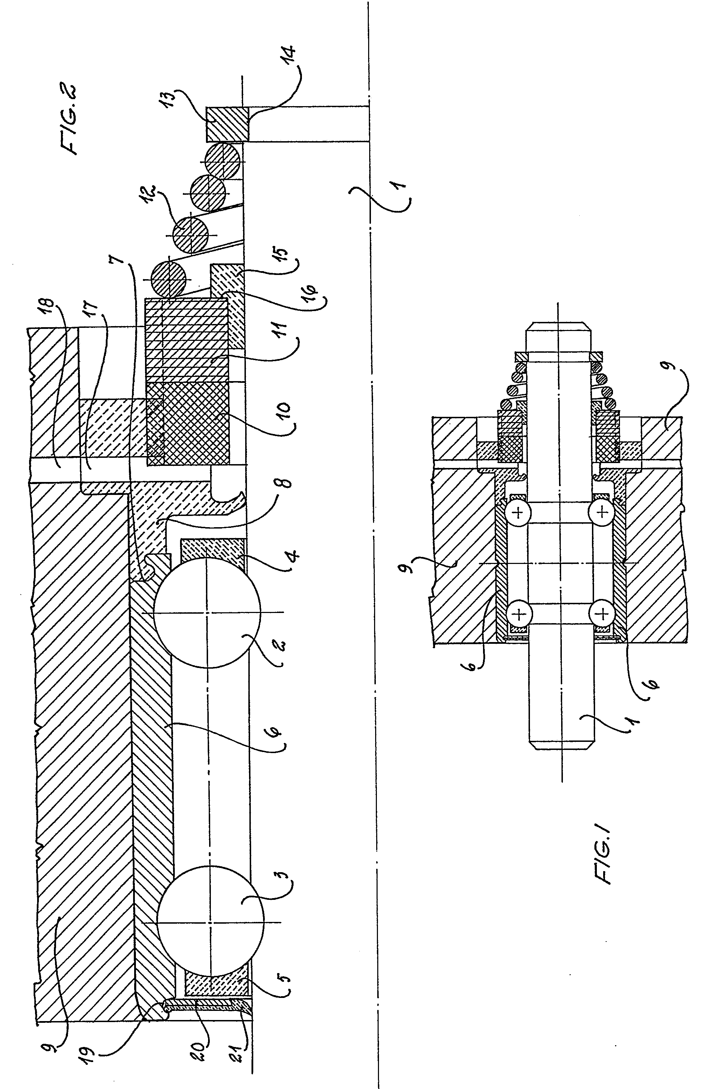

A not limiting execution form is illustrated by the drawings of Table 1, of which fig. 1 is the longitudinal section of the operating assembly fitted on the pump. Fig. 2 is the magnified longitudinal section of one half of the assembly illustrated in the preceding figure. The version employs two sets of balls 2 and 3 on shaft 1 properly fitted at the same distance by means of a pair of cages 4 and 5 in plastic material. The above shaft is turning by means of the said cinematisms in the cylindrical coaxial 6 engaging the two ball sets 2 and 3 in grooves foreseen for this purpose. Cylindrical coaxial 6 foresees a hooking profile 7 on one end binding by groove a seal body 8, the task fo which is to ensure sealing on shaft 1, on the pump body 9 as well as on counterface body 10. In particular, the counterface body 10 is kept pressed by ring 11 as a consequence of the thrust made by helical spring 12, the position of which is fixed in advance by ring 13: its position is depending on groove 14 on shaft 1. Annular gasket 11 has an additional seal on shaft 1 by means of annular piece 15 with crown-shaped relief 16. On body 8, a duct 17 is foreseen permitting the drain of liquid infil trations, if any, through bore 18 in correspondence on body 19. On the other end of ring 6, a sealing element is foreseen engaged in 19 and consisting of plate 20 covered with volcanized rubber 21 acting as a seal on shaft 1.

The operative assembly can be fitted differently carried out bu changing the form of the components and the relevant materials that are employd.

Claims.

0089449

1) Bearing with integrated sealing device for motor water pumps, characterized by the fact that the operative assembly foresses a cylindrical coaxial body which can be fitted integral on the pump, for mounting the supporting shaft of the turning piece which rotates on two ball sets kept by two cages at equal distance. The said coaxial is hooked in an integrally operating way on the end of a gasket body for sealing on the shaft, on the pump and on a counterface body pressed, by means of a ring, by a thrusting spring on a crown-shaped relief of the shaft.

2) Bearing with integrated sealing device for motor water pumps, according to the previous claim, characterized by the fact that on the other coaxial end, a preclusion sieve is foreseen positioned in an inner annular groove and consisting of a thin plate covered with volcanized rubber.

3) Bearing with integrated sealing device for motor water pumps, according to the previous claims, characterized by the fact that in the gasket body, a draining duct is foreseen for eliminating the liquid infiltrations.

4) Bearing with integrated sealing device for motor water pumps, according to the previous claims, characterized by the fact that employs two sets of balls 2 and 3 on shaft 1 properly fitted at the same distance by means of a pair of cages 4 and 5 in plastic material. The above shaft is turning by means of the said cinematisms in the cylindrical coaxial 6 engaging the two ball sets 2 and 3 in grooves foreseen for this purpose. Cylindrical coaxial 6 foresees a hooking profile 7 on one end binding by groove a seal body 8, the task of which is to ensure sealing on shaft 1, on the pump body 9 as well as on counterface body 10. In particular, the counterface body 10 is kept pressed by ring 11 as a consequence of the thrust made by helical spring 12, the position of which is fixed in advance by ring 13: its position is depending on groove 14 on shaft 1. Annular gasket 11 has an additional seal on shaft 1 by means of annular piece 15 with crown-shaped relief 16. On body 8, a duct 17 is foreseen permitting the drain of liquid infiltrations, if any, through bore 18 in correspondence of body 9. On the other end of ring 6, a sealing element is foreseen engaged in 19 and consisting of plate 20 covered with volcanized rubber 21 acting as

0089449

a seal o shaft 1.

FIG.2

FIG.1

0089449

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,A | FR – A – 2 149 867 (RANSOME HOFFMANN POLLARD LTD.) <br> * claim 1 ; fig. 1, 2 * <br> & GB – A – 1 395 157 | 1,2,4 | F 16 C 33/78 <br> F 04 D 29/12 |
| Y,A | US – A – 3 511 513 (J.C. DAHLHEIMER) <br> * claim 1 ; fig. 1 * | 1,3,4 | |
| A | DE – A – 2 305 476 (INDUSTRIEWERK SCHAEFFLER OHG) <br> * claim 1; page 5, lines 20 to 23 ; fig. 2, 3 * | 1–4 | **TECHNICAL FIELDS SEARCHED (Int.Cl. ³)** |
| E,X | EP – A1 – 0 060 109 (SKF (U.K.) LTD.) <br> * claims 1, 13 ; fig. 1 to 4 * <br> & GB – A – 2 094 417 | 1,3,4 | F 04 D 29/00 <br> F 16 C 33/00 <br> F 16 J 15/00 |
| A | EP – A1 – 0 010 011 (STE INTERNATIONALE DE MECANIQUE INDUS-TRIELLE S.A. ) | | |
| A | US – A – 3 540 833 (J. TALAMONTI) | | |

The present search report has been drawn up for all claims

| Place of search | Date of completion of the search | Examiner |
|---|---|---|
| Berlin | 21-10-1982 | MASSALSKI |

EPO Form 1503.1  06.78